# EUROPEAN PATENT SPECIFICATION

(11) **EP 3 769 976 B1**
(45) Date of publication and mention of the grant of the patent: **03.01.2024**
(21) Application number: 19822235.8
(22) Date of filing: 18.06.2019
(51) Int. Cl.: B60C 11/12, B60C 5/00, B60C 11/03, B60C 19/00

(54) **TIRE**
REIFEN
PNEUMATIQUE

(30) Priority: 18.06.2018 JP 2018115468
(43) Date of publication of application: 27.01.2021
(73) Proprietor: Bridgestone Corporation, Chuo-Ku Tokyo 104-8340 (JP)
(72) Inventor: TOMIDA Tatsuya, Tokyo 104-8340 (JP)
(74) Representative: Marks & Clerk LLP
(86) International application number: PCT/JP2019/024153
(87) International publication number: WO 2019/244897

(56) References cited:
- EP-A1- 2 127 909
- FR-A1- 2 926 037
- JP-A- 2011 509 213
- JP-A- 2013 539 735
- JP-A- 2015 214 303
- JP-A- 2017 185 889
- JP-A- 2017 185 889
- US-A1- 2013 263 984

## Description

### TECHNICAL FIELD

The present invention relates to a tire.

### BACKGROUND

Heretofore, there has been known a tire which is installed to a vehicle and to which, for example, Helmholtz resonator is applied, to reduce air column resonance sound generated between a running road surface and a groove portion of a tread surface of the tire during vehicle running.

This Helmholtz resonator includes an air chamber that is closed when grounded on the running road surface, and defined and formed with the running road surface, and in the air chamber, an air chamber volume or the like is set on an assumption that the air chamber is closed when a tire tread is grounded on the running road surface.

As a tire including such a resonator, for example, a pneumatic tire of Patent Literature 1 is suggested. Attention is also drawn to the disclosures of FR2926037A1 and JP2017-185889A.

### CITATION LIST

### Patent Literature

PTL 1: Japanese Patent Laid-Open No. 2015-171835

### SUMMARY

### (Technical Problem)

However, actual running is not always running on a smooth road surface, and may include running on a rough road surface having unevenness, steps and the like. Consequently, a case may occur where an air chamber defined between a tire and the running road surface does not obtain a predetermined volume. There is also a case where an unexpected gap is generated between the tire and the running road surface, the air chamber itself is not formed, and a resonator does not sufficiently function. In these cases, air column resonance sound cannot be sufficiently reduced.

Thus, an object of this invention is to provide a tire in which air column resonance sound can be reliably reduced during vehicle running.

### (Solution to Problem)

To achieve the above object, a tire according to this invention is a tire including, in a tread surface, a plurality of land portions partitioned by a circumferential main groove extending continuously in a tire circumferential direction on at least one side in a tire width direction, the tire including, in at least one land portion of the plurality of land portions, a resonator including an auxiliary groove that terminates in the land portion, and at least one branch groove that communicates between the auxiliary groove and the circumferential main groove, wherein the auxiliary groove consists of a hidden groove portion having an opening width in the tread surface which is smaller than a groove width of a groove bottom, and wherein the groove width of the groove bottom of the auxiliary groove is larger on one side in the tire circumferential direction than on the other side.

Here, in the present description, "the tread surface" means an outer circumferential surface over an entire circumference of the tire, which comes in contact with a road surface when the tire assembled to a rim and filled with a predetermined internal pressure is rolled in a state of being loaded with a maximum load, and "a tread ground contact edge" means an edge of the tread surface in the tire width direction.

Furthermore, in the present description, "the opening width", "the groove width" or the like refers to a width measured along a direction orthogonal to an extending direction of the groove in the following reference state. Hereinafter, it is considered that dimensions or the like of respective elements such as the grooves or the like are measured in the reference state, unless otherwise mentioned.

In the present description, "the reference state" indicates a state where the tire is assembled to the rim, filled with the predetermined internal pressure and unloaded.

Note that the above "rim" indicates an approved rim (a measuring rim in Standards Manual of ETRTO, and a design rim in Year Book of TRA) in an applicable size described or to be described in future in an industrial standard effective in a district where the tire is produced and used, for example, JATMA Year Book of JATMA (the Japan Automobile Tyre Manufacturers Association) in Japan, Standards Manual of ETRTO (the European Tyre and Rim Technical Organization) in Europe, Year Book of TRA (the Tire and Rim Association, Inc.) in U.S. or the like (that is, the above "rim" also includes a size that can be included in the above industrial standard in future, in addition to the existing size. Examples of "the size to be described in future" include sizes described as "future developments" in 2013 edition of Standards Manual of ETRTO). However, it is considered that a rim having a size that is not described in the above industrial standard is a rim having a width corresponding to a bead width of the tire. Furthermore, "the predetermined internal pressure" refers to an air pressure (a maximum air pressure) corresponding to a maximum load capability of a single wheel in an applicable size and ply rating described in Year Book of JATMA described above, or the like. For a rim having a size that is not described in the above industrial standard, "the predetermined internal pressure" refers to an air pressure (the maximum air pressure) corresponding to the maximum load capability prescribed for each vehicle to which the tire is installed. Additionally, "the maximum load" refers to a load corresponding to the above maximum load capability. Note that air described herein can be replaced with an inert gas such as a nitrogen gas, or the like.

### (Advantageous Effect)

According to this invention, a tire can be provided in which air column resonance sound can be reliably reduced during vehicle running.

### BRIEF DESCRIPTION OF THE DRAWINGS

In the accompanying drawings:
FIG. 1 is a partial developed view of a tread surface of a tire according to an embodiment of the present invention;
FIG. 2 is a partial enlarged view of an intermediate land portion including a resonator illustrated in FIG. 1;
FIG. 3 is a partial enlarged view of an intermediate land portion including another resonator illustrated in FIG. 1;
FIG. 4 is a cross-sectional view taken along a depth direction of the resonator illustrated in FIG. 1; and
FIG. 5 is an explanatory view illustrating a relationship between a ground contact line and an auxiliary groove in the tread surface.

### DETAILED DESCRIPTION

Hereinafter, an embodiment of this invention will be described with reference to the drawings.

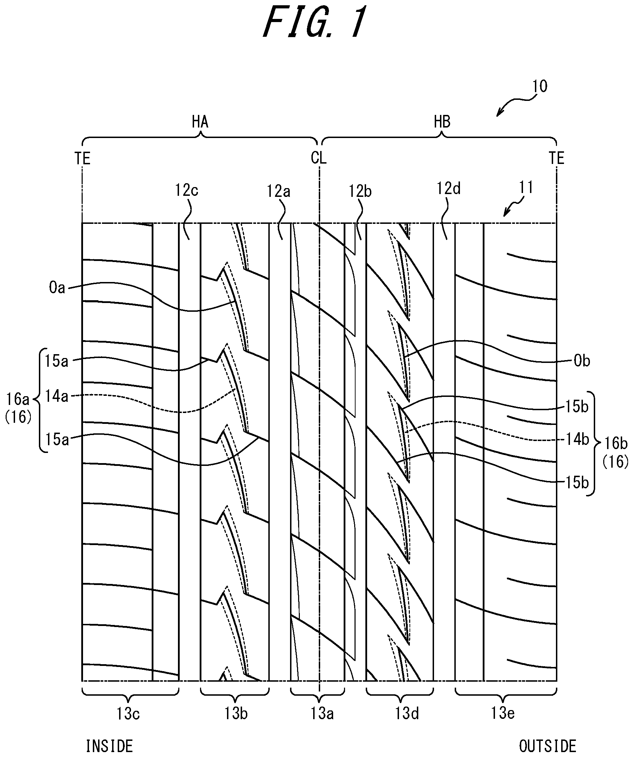

FIG. 1 is a partial developed view illustrating a tread surface 11 of a tire 10 according to the embodiment of the present invention. Although partially omitted from the drawing, the tire 10 of the present embodiment includes a carcass including a radial structure toroidally extending between bead portions, a belt disposed outside the carcass of a tread portion in a tire radial direction, and a tread rubber disposed outside the belt in the tire radial direction to form the tread surface 11.

The tire 10 of the present embodiment includes, in the tread surface 11, three or more circumferential main grooves 12 extending continuously in a tire circumferential direction, and a plurality of land portions 13 partitioned by the circumferential main grooves 12, respectively, on at least one side in a tire width direction, as illustrated in FIG. 1.

In the present embodiment, the tire 10 includes five land portions 13 partitioned by four circumferential main grooves 12 on at least one side in the tire width direction. More specifically, the tire includes, in the tread surface 11, a central land portion 13a partitioned by two circumferential main grooves 12a, 12b adjacent to each other via a tire equator plane CL, an intermediate land portion 13b partitioned by two circumferential main grooves 12a, 12c located in a tire half portion HA on one side of the tire equator plane CL (in FIG. 1, a drawing left side), a shoulder land portion 13c partitioned by a ground contact edge TE of the tire half portion HA and the circumferential main groove (a shoulder main groove) 12c on a ground contact edge TE side, an intermediate land portion 13d partitioned by two circumferential main grooves 12b, 12d extending in a tire half portion HB on the other side of the tire equator plane CL (in FIG. 1, a drawing right side), and a shoulder land portion 13e partitioned by a ground contact edge TE of the tire half portion HB and the circumferential main groove (a shoulder main groove) 12d on a ground contact edge TE side.

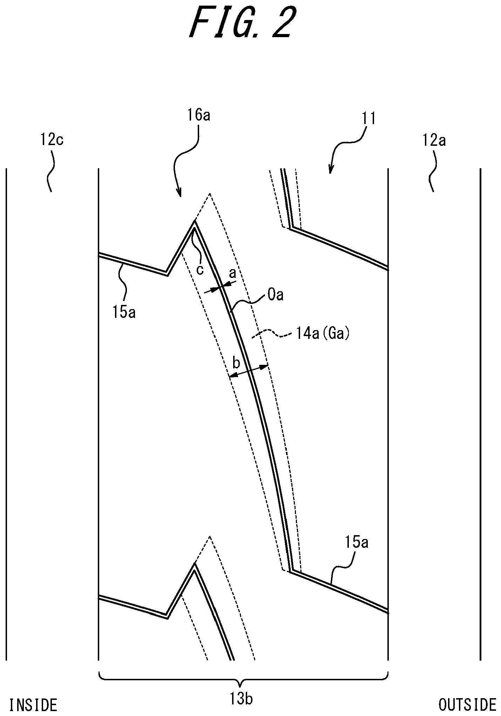

Here, the tire half portion HA is a vehicle-installed inside portion that is an inside (in FIG. 1, INSIDE is indicated) when the tire 10 is installed to the vehicle, and the tire half portion HB is a vehicle-installed outside portion that is an outside (in FIG. 1, OUTSIDE is indicated) when the tire 10 is installed to the vehicle (this also applies to INSIDE and OUTSIDE of FIGS. 2, 3 and 5).

In the present embodiment, four circumferential main grooves 12 are provided, but the present invention is not limited to this example, and three or more, such as five or more, circumferential main grooves may be provided.

Note that each of the circumferential main grooves 12 (12a, 12b, 12c, and 12d) in the tire 10 linearly extends continuously along the tire circumferential direction, but in another example, an extending form other than a linear form, such as a zigzag-shaped or wavy-shaped form can be taken. Furthermore, each of the land portions 13 (13a, 13b, 13c, 13d, and 13e) in this example is a rib-like land portion extending continuously in the tire circumferential direction, but in another example, the portions may be block land portions or the like.

The tire 10 of the present embodiment includes a resonator (in the example illustrated in FIG. 1, Helmholtz resonator) 16 including an auxiliary groove 14 that terminates in the intermediate land portion 13, and at least one branch groove 15 that communicates between the auxiliary groove 14 and the circumferential main groove 12, in at least the intermediate land portion 13 (13b, 13d) adjacent to the inside in the tire width direction of the outermost circumferential main groove 12 (12c, 12d) in the tire width direction among the plurality of land portions 13.

In the present embodiment, the resonator 16 is constituted of two resonators 16a, 16b. In the example illustrated in FIG. 1, one resonator 16a is provided in one intermediate land portion 13b of the intermediate land portions 13b, 13d that are two land portions 13, and the other resonator 16a is provided in the other intermediate land portion 13d of the intermediate land portions 13b, 13d that are two land portions 13. The resonator 16a includes an auxiliary groove 14a that terminates in the intermediate land portion 13b and two branch grooves 15a, and the resonator 16b includes an auxiliary groove 14b that terminates in the intermediate land portion 13d and two branch grooves 15b.

That is, the tire 10 of the present embodiment includes the auxiliary groove 14a in the inside intermediate land portion 13b of the vehicle-installed inside that is the inside when the tire is installed to the vehicle, and includes the auxiliary groove 14b in the outside intermediate land portion 13d that is the vehicle-installed outside that is the outside when the tire is installed to the vehicle.

Furthermore, the tire of the present invention may include a configuration where the resonator 16 only includes one of the two branch grooves 15 (15a, 15b). That is, the tire may include a configuration where the resonator 16 communicates only with the circumferential main groove 12 that partitions the land portion 13 on one side in the tire width direction. For example, the auxiliary groove 14a of the intermediate land portion 13b may communicate with the circumferential main groove 12a or the circumferential main groove 12c, and the auxiliary groove 14b of the intermediate land portion 13d may communicate with the circumferential main groove 12b or the circumferential main groove 12d. Furthermore, in the tire of the present invention, the resonator 16 may include three, four, or more branch grooves 15.

In the present embodiment, a groove width of the branch groove 15 in the tread surface 11 is preferably from 0.4 to 1.2 mm, more preferably from 0.5 to 0.7 mm. If the groove width is 0.4 mm or more, the branch groove 15 is not closed also during ground contact of the tread surface 11, and hence a function of the resonator 16 can be exhibited. If the groove width is 1.2 mm or less, rigidity of the land portion around the branch groove 15 can be acquired, and uneven wear can be inhibited.

Note that the branch groove 15 is always in an opened state.

In the resonator 16 (16a, 16b), the auxiliary groove 14 (14a, 14b) has a shape extended in the tire circumferential direction, i.e., a shape having a length in the tire circumferential direction which is larger than a length in the tire width direction, and a groove volume of the auxiliary groove 14 is larger than a groove volume of the branch groove 15 (15a, 15b) connected to the auxiliary groove 14.

According to the present embodiment, in the resonator 16a, an end portion of the auxiliary groove 14 on one side (a drawing upside in FIG. 1) in the tire circumferential direction communicates with the circumferential main groove 12c via one of two branch grooves 15a, and an end portion of the auxiliary groove 14 on the other side (a drawing downside in FIG. 1) in the tire circumferential direction communicates with the circumferential main groove 12a via the other branch groove of the two branch grooves 15a. Furthermore, in the resonator 16b, an end portion of the auxiliary groove 14 on one side (the drawing upside in FIG. 1) in the tire circumferential direction communicates with the circumferential main groove 12d via one of two branch grooves 15b, and an end portion of the auxiliary groove 14 on the other side (the drawing downside in FIG. 1) in the tire circumferential direction communicates with the circumferential main groove 12b via the other branch groove of the two branch grooves 15b.

However, in the tire of the present invention, the branch groove 15 may be provided in a portion other than an end portion of the auxiliary groove 14 in the tire circumferential direction, for example, in a center portion of the auxiliary groove 14 in the tire circumferential direction.

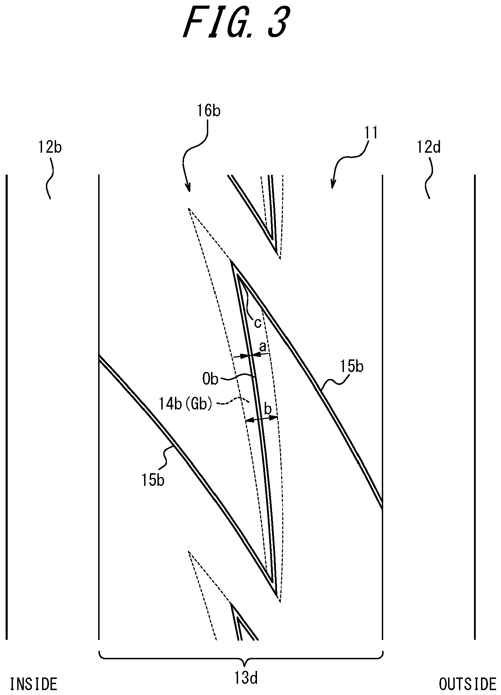

FIG. 2 and FIG. 3 are partial enlarged views of the tread surface 11 illustrated in FIG. 1, FIG. 2 illustrates the resonator 16a and a surrounding part of the resonator 16a in an enlarged manner, and FIG. 3 illustrates the resonator 16b and a surrounding part of the resonator 16b in an enlarged manner.

The auxiliary groove 14 of the resonator 16 of the present embodiment consists of a hidden groove portion having an opening width a in the tread surface 11 which is smaller than a groove width of a groove bottom.

More specifically, the auxiliary groove 14 (14a, 14b) of the resonator 16 (16a, 16b) includes a hidden groove portion G (Ga, Gb) having the opening width a, in the tread surface 11, of an opening O (Oa, Ob) of the entire groove opened in the tread surface 11 which is smaller than a groove bottom width b that is the groove width of the groove bottom. In FIGS. 1 to 3, a groove wall of the hidden groove portion G (Ga, Gb) which does not appear in the tread surface 11 is illustrated with a hidden line (a broken line).

Here, the opening O (Oa, Ob) opened in the tread surface 11 is located in an almost center of a groove portion opening width all over an entire area of the hidden groove portion G (Ga, Gb) in a length direction.

Furthermore, the opening width a is an orthogonal direction distance between opening edges on opposite sides of the opening O (Oa, Ob) in the tread surface 11 in an opening extending direction, and the groove bottom width b is an orthogonal direction distance between groove walls on opposite sides in a groove bottom extending direction.

A plurality of resonators 16a including the auxiliary grooves 14a and a plurality of resonators 16b including the auxiliary grooves 14b are arranged at approximately equal intervals in the tire circumferential direction, respectively.

The auxiliary groove 14 of the resonator 16 consists of the hidden groove portion G, and hence the auxiliary groove 14 can be reliably closed even in a case where the tire 10 runs on a rough road surface having unevenness, steps and the like. Consequently, an air chamber defined between the tire and a running road surface can be set to a predetermined volume, and a situation where an unexpected gap is generated between the tire and the running road surface and the air chamber itself is not formed is hard to occur as much as possible.

Therefore, irrespective of a state of the running road surface, the provided resonator 16 can reliably function, and air column resonance sound can be reliably reduced during vehicle running.

In the present embodiment, the groove width of the groove bottom of the auxiliary groove 14 in the resonator 16 of the intermediate land portion 13 located in the half portion of a vehicle-installed inside to the tire equator plane CL is larger on one side in the tire circumferential direction than on the other side.

As illustrated in FIG. 2, the groove bottom width b that is the groove width of the groove bottom of the auxiliary groove 14a of the resonator 16a located in the intermediate land portion 13b located in the half portion HA of the vehicle-installed inside (the drawing left side in FIG. 1) to the tire equator plane CL, that is, the hidden groove portion Ga is larger on one side (the drawing upside) in the tire circumferential direction where the hidden groove portion communicates with the circumferential main groove 12c via the branch groove 15a than on the other side (the drawing downside) in the tire circumferential direction where the hidden groove portion communicates with the circumferential main groove 12a via the branch groove 15a.

Similarly, as illustrated in FIG. 3, the groove bottom width b that is the groove width of the groove bottom of the auxiliary groove 14b of the resonator 16b located in the intermediate land portion 13d located in the half portion HB of the vehicle-installed outside (the drawing right side in FIG. 1) to the tire equator plane CL, that is, the hidden groove portion Gb is larger on one side (the drawing upside) in the tire circumferential direction where the hidden groove portion communicates with the circumferential main groove 12d via the branch groove 15b than on the other side (the drawing downside) in the tire circumferential direction where the hidden groove portion communicates with the circumferential main groove 12b via the branch groove 15b.

Consequently, the tire 10 of the present embodiment includes a configuration where the groove width of the groove bottom (the groove bottom width b) of the auxiliary groove 14 (14a, 14b) is larger on one side in the tire circumferential direction than on the other side.

In the present embodiment, the groove width of the groove bottom gradually decreases from one side toward the other side in the tire circumferential direction.

As illustrated in FIG. 2, the groove bottom width b that is the groove width of the groove bottom of the auxiliary groove 14a of the resonator 16a located in the intermediate land portion 13b, that is, the hidden groove portion Ga gradually decreases so that the hidden groove portion gradually reduces from one side (the drawing upside) in the tire circumferential direction where the hidden groove portion communicates with the circumferential main groove 12c via the branch groove 15a toward the other side (the drawing downside) in the tire circumferential direction where the hidden groove portion communicates with the circumferential main groove 12a via the branch groove 15a.

Similarly, as illustrated in FIG. 3, the groove bottom width b that is the groove width of the groove bottom of the auxiliary groove 14b of the resonator 16b located in the intermediate land portion 13d, that is, the hidden groove portion Gb gradually decreases so that the hidden groove portion gradually reduces from one side (the drawing upside) in the tire circumferential direction where the hidden groove portion communicates with the circumferential main groove 12d via the branch groove 15b toward the other side (the drawing downside) in the tire circumferential direction where the hidden groove portion communicates with the circumferential main groove 12b via the branch groove 15b.

More specifically, the hidden groove portion G of the present embodiment has an almost wedge shape having the groove bottom width b that is larger on one side (the drawing upside) in the tire circumferential direction than on the other side (the drawing downside) in a planar view of the tread surface 11.

The auxiliary groove 14 of the present embodiment inclines and extends in the tire circumferential direction, one side in the tire circumferential direction is disposed on the vehicle-installed inside, and the other side is disposed on the vehicle-installed outside.

The hidden groove portion G (Ga) of the present embodiment illustrated in FIG. 2 and the hidden groove portion G (Gb) of the present embodiment illustrated in FIG. 3 have an entire shape formed in an arc that bends like a bow in the planar view of the tread surface 11. The hidden groove portion inclines and extends in the tire circumferential direction so that one side (the drawing upside) in the tire circumferential direction is located on the vehicle-installed inside that is an inside in a tire width direction when the tire is installed to the vehicle and so that the other side (the drawing downside) in the tire circumferential direction is located on the vehicle-installed outside that is an outside in a tire width direction when the tire is installed to the vehicle.

In the present embodiment, an inclination angle of the auxiliary groove 14 in the tire circumferential direction, in the resonator 16 of the intermediate land portion 13 located in the half portion of the vehicle-installed inside to the tire equator plane CL is larger than an inclination angle of the auxiliary groove 14 in the tire circumferential direction, in the resonator 16 of the intermediate land portion 13 located in the half portion of the vehicle-installed outside to the tire equator plane CL.

In the present embodiment, the inclination angle, in the tire circumferential direction, of the auxiliary groove 14a of the resonator 16a located in the intermediate land portion 13b located in the half portion HA of the vehicle-installed inside (the drawing left side in FIG. 1) to the tire equator plane CL, that is, the hidden groove portion Ga is larger than the inclination angle of the auxiliary groove 14b in the tire circumferential direction, in the resonator 16b of the intermediate land portion 13d located in the half portion HB of the vehicle-installed outside (the drawing right side in FIG. 1) to the tire equator plane CL.

In the present embodiment, the inclination angle of the hidden groove portion G (Ga, Gb) is preferably from 10 to 60°, more preferably from 35 to 45° in the tire circumferential direction. Consequently, a drainage performance due to a pump effect can further improve.

Here, the inclination angle of the hidden groove portion G (Ga, Gb) is an angle formed by a straight line connecting an end portion of the opening O (Oa, Ob) of the hidden groove portion G (Ga, Gb) on one side (the drawing upside) in the tire circumferential direction and an end portion of the opening on the other side (the drawing downside), relative to a tire circumferential line (the tire equator plane CL), in the planar view of the tread surface 11. That is, the angle is formed by a straight line connecting opposite end portions, in the length direction, of the opening O (Oa, Ob) located in almost the center of the groove portion opening width all over the entire area of the hidden groove portion G (Ga, Gb) in the length direction, relative to the tire circumferential line.

In the present embodiment, the auxiliary groove 14 of the resonator 16, that is, the hidden groove portion G has almost the entire area in a groove longitudinal direction which is opened in the tread surface 11 by the opening O (Oa, Ob) passing through almost the center of the hidden groove portion G in a groove width b direction.

The opening width a of the opening O (Oa, Ob) of the hidden groove portion G (Ga, Gb) is preferably from 0.2 to 0.7 mm, more preferably from 0.3 to 0.5 mm. This is because if the opening width a is 0.2 mm or more, it is easy to draw and form the hidden groove portion G from a mold during manufacturing of the tire. If the opening width a is 0.7 mm or less, the opening O of the hidden groove portion G is easily closed during ground contact of the tire, the groove walls that partition the hidden groove portion G support each other, and hence rigidity (particularly, shearing rigidity) of the intermediate land portion 13 in which the resonator 16 is formed can be more suitably maintained. Note that the opening O does not have to be necessarily opened, and may be completely closed according to circumstances.

Furthermore, a groove depth (a length along a normal line direction of the tread surface 11) d of the hidden groove portion G (Ga, Gb) is preferably from 6.0 to 9.0 mm, more preferably from 7.0 to 8.0 mm. If the groove depth d is 6 mm or more, a groove depth of a groove bottom side portion f is sufficient, and it is easy to acquire the groove volume of the auxiliary groove 14, and if the groove depth is 9 mm or less, rigidity in an opening side portion e can be more suitably acquired.

Note that the groove depth d is formed to be constant in the entire area of the hidden groove portion G.

In the present embodiment, the opening O of the auxiliary groove 14 in the tread surface 11, in the resonator 16 of the intermediate land portion 13 located in the half portion of the vehicle-installed inside to the tire equator plane CL bends and extends.

In the present embodiment, as illustrated in FIGS. 2, 3, the opening O (Oa, Ob) of the hidden groove portion G (Ga, Gb) in the tread surface 11 includes, for example, an acute-angle bent portion that protrudes (protrudes upward in the drawing) in the tire circumferential direction, in the planar view of the tread surface 11. This bent portion forms a tongue-like easily deformable protruding end portion c in the tread surface 11 that faces the opening O (Oa, Ob).

Thus, the tire 10 of the present embodiment includes a configuration where the opening O of the auxiliary groove 14 (14a, 14b) in the tread surface 11 bends and extends.

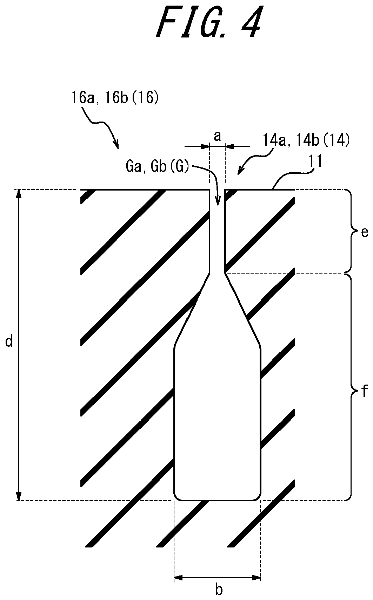

FIG. 4 is a cross-sectional view of a plane orthogonal to an extending direction of the auxiliary groove 14, and illustrates a cross section of the auxiliary groove 14 (14a, 14b) of the resonator 16 (16a, 16b).

As illustrated in FIG. 4, in the present embodiment, a cross-sectional shape of the auxiliary groove 14 including the hidden groove portion G (Ga, Gb) is an almost flask shape in which the opening width a of the opening O (Oa, Ob) in the tread surface 11 is narrower (smaller) than the groove depth d of the hidden groove portion G, and narrower (smaller) than the groove bottom width b that is the groove width of the groove bottom.

As illustrated in FIG. 4, the hidden groove portion G in the resonator 16 includes the opening side portion e having a groove width similar to the opening width a in the tread surface 11, and the groove bottom side portion f having a groove width larger than the opening width a, in order from a tread surface 11 side in the cross-sectional view of the plane orthogonal to the extending direction of the auxiliary groove 14.

In the resonator 16, the groove width of the opening side portion e of the hidden groove portion G is constant, while the groove width of the groove bottom side portion f gradually increases from the tread surface 11 side toward a groove bottom side, near a middle of the groove bottom side portion f, and is then maintained to be constant to the groove bottom.

In the hidden groove portion G of the present embodiment, the groove bottom width b of the opening O is preferably from 1.0 to 4.0 mm, more preferably from 1.5 to 2.5 mm. The groove bottom width of the opening side portion e is preferably from 1.0 to 4.0 mm, more preferably from 2.0 to 3.0 mm, and the groove bottom width of the groove bottom side portion f is preferably from 4 to 7 mm, more preferably from 5 to 6 mm.

If the groove bottom width b is 1.5 mm or more, even during the tire ground contact, the air chamber of the resonator 16 is not crushed, an air chamber volume can be acquired, and hence an expected sound absorption performance can be exhibited. If the groove bottom width is 2.5 mm or less, the land portion rigidity can be inhibited from being decreased, and steering stability can be inhibited from being decreased. If the groove bottom width of the opening side portion e is 1.0 mm or more, turn-up and wear in a vicinity of an opening end of the land portion can be inhibited, and if the groove bottom width is 4.0 mm or less, deterioration of a wet performance in a middle of wear due to running can be inhibited.

However, in the resonator of the present invention, the groove bottom side portion f of the hidden groove portion G may have a shape having a groove width that gradually increases and gradually decreases from an opening O side of the tread surface 11 toward a groove bottom side in the cross-sectional view (e.g., a round, elliptic or rhombic shape), a shape having the groove width that always gradually increases from the tread surface 11 toward the groove bottom side (e.g., a triangular shape or a semicircular shape) or the like.

Furthermore, in the resonator of the present invention, the hidden groove portion G may have a configuration where the groove width gradually increases from the opening O side of the tread surface 11 toward the groove bottom side, and hence the opening width a of the opening O in the tread surface 11 is smaller than the groove width on the groove bottom side.

Subsequently, operations and effects by the tire 10 according to the present embodiment will be described.

As described above, the tire 10 includes the resonator (Helmholtz resonator in the example illustrated in FIG. 1) 16 (16a, 16b) including the auxiliary groove 14 that terminates in the intermediate land portion 13, and at least one branch groove 15 that communicates between the auxiliary groove 14 and the circumferential main groove 12, in at least the intermediate land portion 13 (13b, 13d) adjacent to the tire width direction inside of the outermost circumferential main groove 12 (12c, 12d) in the tire width direction among the plurality of land portions 13, and the auxiliary groove 14 of the resonator 16 consists of the hidden groove portion G (Ga, Gb) having the opening width a in the tread surface 11 which is smaller than the groove bottom width b.

Consequently, the resonator 16 provided in the tire 10 reliably functions, so that the air column resonance sound generated between the running road surface and the circumferential main groove 12 (12a, 12b, 12c, 12d) can be reliably reduced during the vehicle running.

Furthermore, in the tire 10, the auxiliary groove 14 of the resonator 16 is the hidden groove portion G having the opening width a of the opening O in the tread surface 11 which is smaller than the groove bottom width b that is the groove width of the groove bottom. In the hidden groove portion G, the opening width a of the opening O (Oa, Ob) opened in the tread surface 11 is smaller than the groove bottom width b, and hence the land portion rigidity due to the resonator 16 provided in the tread surface 11 can be inhibited from being excessively decreased. Consequently, uneven wear in a tread can be inhibited.

In the resonator 16 including this configuration, the air chamber volume can be sufficiently acquired on the groove bottom side of the hidden groove portion G, and hence the uneven wear in the tread can be inhibited while maintaining a frequency band of the resonator 16 in a range that is effective for the reduction of the air column resonance sound. Furthermore, in the tire 10 including the resonator 16, the rigidity of the land portion 13 (the intermediate land portion 13b, 13d in the present embodiment) in which the resonator 16 is formed is difficult to reduce, and hence the steering stability in a vehicle cornering situation can improve.

In the tire 10, the groove bottom width b that is the groove width of the groove bottom of the auxiliary groove 14 in the resonator 16 of the intermediate land portion 13 located in the half portion of the vehicle-installed inside to the tire equator plane CL is larger on one side than on the other side in the tire circumferential direction. Therefore, water or the like in the hidden groove portion G can be smoothly discharged from the portion having a larger groove bottom width b without delay, and drainage efficiency due to the pump effect can improve.

Furthermore, in a case where the groove bottom width b gradually decreases from one side to the other side in the tire circumferential direction, water or the like in the hidden groove portion G can be smoothly sent into the portion having the larger groove bottom width b, and discharge efficiency due to the pump effect can further improve.

In the tire 10, the auxiliary groove 14 inclines and extends in the tire circumferential direction, one side in the tire circumferential direction is disposed on the vehicle-installed inside, and the other side is disposed on the vehicle-installed outside.

That is, the hidden groove portion G inclines and extends in the tire circumferential direction, the portion having the larger groove bottom width b is on the vehicle-installed inside of the tire 10, and the portion having the groove bottom width b that is not larger (that is smaller) is on the vehicle-installed outside of the tire 10. Consequently, the land portion 13 provided with the hidden groove portion G obtains good balance.

Furthermore, the inclination angle of the auxiliary groove 14 in the tire circumferential direction, in the resonator 16 of the intermediate land portion 13 located in the half portion of the vehicle-installed inside to the tire equator plane CL is larger than the inclination angle of the auxiliary groove 14 in the tire circumferential direction, in the resonator 16 of the intermediate land portion 13 located in the half portion of the vehicle-installed outside to the tire equator plane CL. Consequently, on the vehicle-installed outside that is usually more affected in relation to a load applied during the running in the vehicle cornering situation, the groove width is smaller. Consequently, a groove portion volume of the hidden groove portion G is decreased, so that the rigidity of the land portion 13 can be held, resistance to uneven wear improves, and deterioration of a turning performance can be inhibited.

Additionally, the inclination angle of the hidden groove portion G is set to be from 30 to 60° in the tire circumferential direction, and hence the pump effect can be reliably exhibited.

In the tire 10, the inclination angle of the auxiliary groove 14a in the tire circumferential direction in the resonator 16a located in the intermediate land portion 13b located in the half portion HA of the vehicle-installed inside (the drawing left side in FIG. 1) to the tire equator plane CL, that is, the hidden groove portion Ga is larger than the inclination angle of the auxiliary groove 14b in the tire circumferential direction, in the resonator 16b of the intermediate land portion 13d located in the half portion HB of the vehicle-installed outside (the drawing right side in FIG. 1) to the tire equator plane CL.

That is, in the planar view of the tread surface 11, the hidden groove portion Ga of the inside intermediate land portion 13b in the tire circumferential direction inclines more than the hidden groove portion Gb of the outside intermediate land portion 13d (see FIG. 1).

Thus, the inclination angle, in the tire circumferential direction, of the hidden groove portion Ga of the inside intermediate land portion 13b is larger than that of the hidden groove portion Gb of the outside intermediate land portion 13d. Consequently, the drainage performance of the hidden groove portion Ga of the inside intermediate land portion 13b can be higher than the drainage performance of the hidden groove portion Gb of the outside intermediate land portion 13d, and the rigidity of the outside intermediate land portion 13d can be higher than the rigidity of the inside intermediate land portion 13b.

As the inclination angle of the hidden groove portion G in the tire circumferential direction increases, a route toward the circumferential main groove 12 can decrease (the shortest distance is preferable). Therefore, drainage from the hidden groove portion G to the circumferential main groove 12 can be more effectively performed. On the other hand, as the inclination angle of the hidden groove portion G in the tire circumferential direction decreases, the rigidity of the land portion 13 when deformed in the tire width direction can increase. Therefore, a mutual supporting effect in the tread surface 11 during the ground contact can be exhibited.

Therefore, the tire 10 can include an optimum arrangement configuration where the drainage performance is emphasized in the inside intermediate land portion 13b of the inside where a ground contact pressure of the tread of the tire is low during the running (cornering) in the vehicle cornering situation, and a grip property is emphasized in the outside intermediate land portion 13d of the outside where the tread ground contact pressure is high. Consequently, the steering stability during the running in the vehicle cornering situation can be improved while improving the drainage performance.

In the tire 10, the opening O of the auxiliary groove 14 in the tread surface 11, in the resonator 16 of the intermediate land portion 13 located in the half portion of the vehicle-installed inside to the tire equator plane CL bends and extends.

That is, the opening O is not linear, and is bent and formed in a complex shape. When the tire tread surface 11 contacts the running road surface, the opening is easy to open in accordance with deformation of the protruding end portion c, and water or the like in the hidden groove portion G is easily discharged out of the hidden groove portion G through this opened portion. Water can be directly discharged from the opening O in the tread surface 11 to the outside of the hidden groove portion G, and hence the drainage performance of the tire 10 can improve. Note that when the tire tread surface 11 contacts the running road surface, the branch groove 15 is basically in a closed state.

Furthermore, in the tire 10, the hidden groove portion G is provided with the opening side portion e in which the groove width similar to the opening width a of the opening O in the tread surface 11 is maintained inside in the tire radial direction (a groove depth d direction), and hence uneven wear in the tread around the resonator 16 can be more reliably inhibited.

Additionally, in the tire 10, the hidden groove portion G (i.e., the auxiliary groove 14) communicates with the circumferential main groove 12 via the branch groove 15 that communicates with the auxiliary groove 14. Therefore, during rolling of the loaded tire 10, the hidden groove portion G functions as a pump, and water or the like that enters the hidden groove portion G can be efficiently discharged to the circumferential main groove 12. That is, during the rolling of the loaded tire 10, the groove wall of the hidden groove portion G collapses, to push water out of the hidden groove portion G. This can improve the drainage performance or the like of the tire 10.

Water or the like in the hidden groove portion G is discharged due to this pump effect, and the hidden groove portion G is disposed in the normal line direction in a ground contact line along which the land portion 13 (the tread surface 11) including the hidden groove portion G contacts the running road surface.

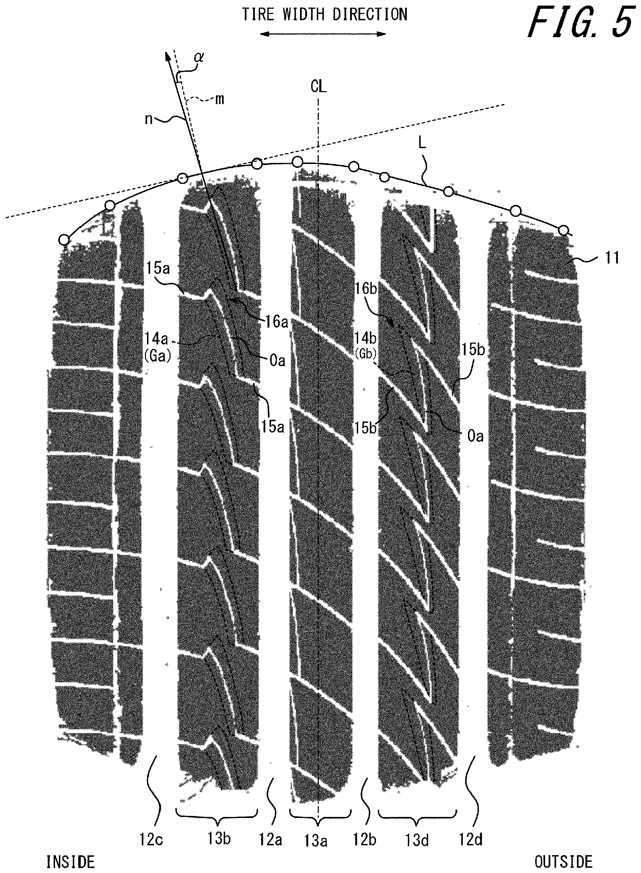

As illustrated in FIG. 5, a ground contact line L has an arc shape including a protruding center in the tire width direction. This is because a tire outer diameter in the tread surface 11 is longest in the center (a center line CL) in the tire width direction, and is shortest in an end portion in the tire width direction. Therefore, it is effective to dispose the hidden groove portion G so that the extending direction of the hidden groove portion G is the normal line direction to the ground contact line L, and an angle α (see FIG. 5) formed by an extending direction extension line n of the hidden groove portion G and a normal line m in the ground contact line L of the land portion 13 (the tread surface 11) including the hidden groove portion G is preferably 0° or more and 45° or less, more preferably 0° or more and 25° or less. With this angle α, the pump effect can be reliably obtained.

Note that the extending direction extension line n of the hidden groove portion G is a straight line that connects a one side (drawing upside) end portion of the opening O (Oa, Ob) of the hidden groove portion G (Ga, Gb) and the other side (drawing downside) end portion in the tire circumferential direction, in the planar view of the tread surface 11.

Furthermore, in the tire 10, a plurality of resonators 16 are arranged at approximately equal intervals in the tire circumferential direction, in the intermediate land portion 13b, 13d. Consequently, the air column resonance sound can be reduced in the tire circumferential direction, and the uneven wear in the tread can be inhibited as much as possible.

In a case where the resonators 16 are provided in a plurality of land portions 13, air column resonance sound in the other circumferential main groove 12 that communicates with the provided resonator 16 can be also reduced, and a total of the air column resonance sound generated in the tire 10 can be reduced.

As described above and illustrated in FIG. 1, the tire 10 of the present embodiment includes the auxiliary groove 14a of the resonator 16a consisting of the hidden groove portion Ga in the inside intermediate land portion 13b of the vehicle-installed inside that is the inside of the tire 10 when installed to the vehicle, and includes the auxiliary groove 14b of the resonator 16b consisting of the hidden groove portion Gb in the outside intermediate land portion 13d of the vehicle-installed outside that is the outside when the tire is installed to the vehicle.

The tire of the present invention is not limited to the configuration of the tire 10 illustrated in FIG. 1, and may include a configuration where the tire includes, in the tread surface 11, the plurality of land portions 13 partitioned by the circumferential main groove 12 extending continuously in the tire circumferential direction on at least one side in the tire width direction, and includes, in at least one land portion 13, the resonator 16 including the auxiliary groove 14 that terminates in the land portion 13, and at least one branch groove 15 that communicates between the auxiliary groove 14 and the circumferential main groove 12, and the auxiliary groove 14 consists of the hidden groove portion G having the opening width a in the tread surface 11 which is smaller than the groove width of the groove bottom.

That is, in the tire of the present invention, the resonator 16 (16a, 16b) consisting of the hidden groove portion G may be provided in at least one land portion 13 (13a, 13b, 13c, 13d, 13e), for example, one of the intermediate land portions 13b and 13d. In this case, two resonators 16a, 16b may be either used alone or used in combination.

### REFERENCE SIGNS LIST

10 tire
11 tread surface
12, 12a, 12b, 12c, and 12d circumferential main groove
13, 13a, 13b, 13c, 13d, and 13e land portion
13b and 13d intermediate land portion
13c and 13e shoulder land portion
14, 14a, and 14b auxiliary groove
15, 15a, and 15b branch groove
16, 16a, and 16b resonator
CL tire equator plane
G, Ga, and Gb hidden groove portion
HA tire half portion on one side
HB tire half portion on the other side
L ground contact line
O, Oa, and Ob opening
TE tread edge
a opening width
b groove bottom width
c protruding end portion
d groove depth
e opening side portion
f groove bottom side portion
m normal line in the ground contact line
n extending direction extension line
α angle formed by the normal line m and the extension line n

## Claims

1. A tire (10) including, in a tread surface (11), a plurality of land portions (13) partitioned by a circumferential main groove (12) extending continuously in a tire circumferential direction on at least one side in a tire width direction, the tire (10) comprising, in at least one land portion (13) of the plurality of land portions (13), a resonator (16) including an auxiliary groove (14) that terminates in the land portion (13), and at least one branch groove (15) that communicates between the auxiliary groove (14) and the circumferential main groove (12), wherein the auxiliary groove (14) consists of a hidden groove portion (G) having an opening width (a) in the tread surface (11) which is smaller than a groove width (b) of a groove bottom, and
**characterised in that** the groove width (b) of the groove bottom of the auxiliary groove (14) is larger on one side in the tire circumferential direction than on the other side.

2. The tire (10) according to claim 1, wherein the groove width of the groove bottom of the auxiliary groove (14) gradually increases from the other side toward the one side in the tire circumferential direction.

3. The tire (10) according to claim 1 or 2, wherein the auxiliary groove (14) inclines and extends in the tire circumferential direction, the one side in the tire circumferential direction is disposed on a vehicle-installed inside, and the other side is disposed on a vehicle-installed outside.

4. The tire (10) according to any one of claims 1 to 3, wherein an opening (O) of the auxiliary groove (14) in the tread surface (11) bends and extends.

## Patentansprüche

1. Reifen (10), der in einer Laufflächenoberfläche (11) eine Vielzahl von Stegabschnitten (13) einschließt, die durch eine umlaufende Hauptrille (12) unterteilt sind, die sich kontinuierlich in einer Reifenumfangsrichtung auf mindestens einer Seite in einer Reifenbreitenrichtung erstreckt, wobei der Reifen (10) in mindestens einem Stegabschnitt (13) der Vielzahl von Stegabschnitten (13) einen Resonator (16), der eine Hilfsrille (14) einschließt, die in dem Stegabschnitt (13) endet, und mindestens eine Zweigrille (15) umfasst, die zwischen der Hilfsrille (14) und der umlaufenden Hauptrille (12) kommuniziert, wobei die Hilfsrille (14) aus einem verborgenen Rillenabschnitt (G) mit einer Öffnungsbreite (a) in der Laufflächenoberfläche (11) besteht, die kleiner ist als eine Rillenbreite (b) eines Rillenbodens, und
**dadurch gekennzeichnet, dass** die Rillenbreite (b) des Rillenbodens der Hilfsrille (14) auf einer Seite in der Reifenumfangsrichtung größer ist als auf der anderen Seite.

2. Reifen (10) nach Anspruch 1, wobei die Rillenbreite des Rillenbodens der Hilfsrille (14) von der anderen Seite zu der einen Seite hin in der Reifenumfangsrichtung allmählich zunimmt.

3. Reifen (10) nach Anspruch 1 oder 2, wobei die Hilfsrille (14) geneigt ist und sich in der Reifenumfangsrichtung erstreckt, die eine Seite in der Reifenumfangsrichtung an einer im Fahrzeug eingebauten Innenseite angeordnet ist, und die andere Seite an einer im Fahrzeug eingebauten Außenseite angeordnet ist.

4. Reifen (10) nach einem der Ansprüche 1 bis 3, wobei sich eine Öffnung (O) der Hilfsrille (14) in der Laufflächenoberfläche (11) biegt und erstreckt.

## Revendications

1. Pneumatique (10) incluant, dans une surface de bande de roulement (11), une pluralité de parties d'appui (13) divisées par une rainure principale circonférentielle (12) s'étendant continuellement dans une direction circonférentielle du pneumatique sur au moins un côté dans une direction de la largeur du pneumatique, le pneumatique (10) comprenant, dans au moins une partie d'appui (13) de la pluralité de parties d'appui (13), un résonateur (16) incluant une rainure auxiliaire (14) qui se termine dans la partie d'appui (13), et au moins une rainure ramifiée (15) qui communique entre la rainure auxiliaire (14) et la rainure principale circonférentielle (12), dans lequel la rainure auxiliaire (14) consiste en une portion de rainure cachée (G) ayant une largeur d'ouverture (a) dans la surface de bande de roulement (11) qui est plus petite qu'une largeur de rainure (b) d'un fond de rainure, et
**caractérisé en ce que** la largeur de rainure (b) du fond de rainure de la rainure auxiliaire (14) est plus grande sur un côté dans la direction circonférentielle du pneumatique que sur l'autre côté.

2. Pneumatique (10) selon la revendication 1, dans lequel la largeur de rainure du fond de rainure de la rainure auxiliaire (14) augmente progressivement de l'autre côté vers l'un côté dans la direction circonférentielle du pneumatique.

3. Pneumatique (10) selon la revendication 1 ou 2, dans lequel la rainure auxiliaire (14) s'incline et s'étend dans la direction circonférentielle du pneumatique, l'un côté dans la direction circonférentielle du pneumatique est disposé sur un intérieur installé sur le véhicule, et l'autre côté est disposé sur un extérieur installé sur le véhicule.

4. Pneumatique (10) selon l'une des revendications 1 à 3, dans lequel une ouverture (O) de la rainure auxiliaire (14) dans la surface de bande de roulement (11) se plie et s'étend.
